# EUROPEAN PATENT APPLICATION

(11) **EP 0 936 841 A1**
(43) Date of publication of application: **18.08.1999**
(21) Application number: 99101531.4
(22) Date of filing: 29.01.1999
(51) Int. Cl.: H04R 25/00, H04R 1/10, H04B 5/00, H04R 27/02

(54) **Auricular device for patients with hypoacusis**

(30) Priority: 11.02.1998 AR 9800591 U
(71) Applicant: VYM S.A., 1426 Buenos Aires (AR)
(72) Inventor: De Chiara, Daniel Oscar, 7607 Miramar, Buenos Aires (AR)
(74) Representative: Perez Bonal, Bernardo

(57) **Abstract**

The present auricular device comprises:
- at least one inductor coil (6) arranged inside one of a receptacles (5), closeness applicable to a retro-auricular earphone (a); and
- a connection circuit (e) including an inductor coil (6), and including connection means (13) to an audio frequency signals output of a transmitter device (d).

## Description

### Field of Invention:

The present invention concerns an auricular device for hypoacusic patients, that is patients suffering from hypoacusis. By means of the present device audio frequency senders such as TV sets, music equipment, recorders and the like can be heard by hypoacusic persons without interference and scrambler effects usually produced by conventional earphones devices.

### Background of the Invention:

As is well known in the art, earphones can be defined as electronic devices for amplifying sounds useful for patients with hearing problems. Some of the earphones components are similar to the ones used in audio transmitters systems, although in that particular case the amplified sound is directed only to the patient ear. To do so, several components are involved including microphones, amplifiers, miniaturized loudspeakers, and batteries all of them are arranged inside an earphone casing which is usually arranged behind the patient earflap or inside the patient auditive conduit. The amplified sound is directed to the auditive conduit through a small tube.

Earphones usually include an audio frequency amplifier with a different slope filter panel and a variable audio response curve. They are usually used for compensating patients auditive diminution using electronic artificial means so that an acceptable audition level is reached.

For an hypoacusic patient one of the most important problem created by using hearing aids (earphones) is the interference created by noises coming from different sound sources, intermingled noises. This is the so called "audio intermodulation" received by earphone microphone and preamplifier so that all sounds intermingling flow to the earphone at the same time.

The impossibility of hearing and identifying a single voice between a set of voices, the "resound" effect produced due to the microphone location inside the earphone, and the different kind and group of sounds coming from, for example, a TV set or audio equipment usually keep a hypoacusic patient away from several daily labors or cultural activities. This is the reason why regular earphones do not solve the problems usually faced by hypoacusic patients, so that an auricular device for helping them is still a market need.

In general terms, there are three different kind of regular earphones:
1) intra-auricular earphones,
2) retro-auricular earphones and
3) "box" type earphones.

1) Intra-auricular earphones are usually arranged inside the patient ear and is applied in not so severe, incipient auditive diminution cases.
2) Retro-auricular earphone is placed in a small box or casing arranged between patient earflap and head. Audio output of this earphone is connected to the patient auditive conduit by means of a small tube. This tube is inserted to a flexible silicone moldable piece adapted to the patient auditive conduit. This kind of earphones are used for patients in which a mid-high amplification is necessary.
3) "Box" type earphones are used for patients in which none of the above cited earphones work, and they are so called "box" type because a casing similar to a small cigarettes box is used. It is connected to the patient ear by means of a cord auricular or receptor complemented with a moldable piece made of flexible silicone or rigid acrylic material.

It would be highly desirable to develop an auricular device with which a hypoacusic patient can hear sounds coming from audio frequency senders without interference and undesirable noises.

### Summary of the Invention:

Taking into account that most earphones used are of the retro-auricular type, the present device was developed not for replacing former earphones but for improving auditive possibilities to hypoacusic patients.

As mentioned before, most earphones used by hypoacusic persons are of the retro-auricular type. In turn, most retro-auricular earphones include an electronic component called telephonic coil by which a telephonic communication can be heard by patient without interference from other noises coming from environment. Taking profit from this availability, the present invention purposes an auricular device applicable to patient earflap in which the above cited retro-auricular earphone is arranged, comprising a head support including receptacles inside of which inductor coils are arranged. These inductor coils closeness applicable to the cited retro-auricular earphone, include connection circuit by which is connected to any signal transmitter device such as radios, TV sets, stereophonic music equipment, cinemas, idiom labs, computers, portable recorders, etc.

Once a patient using a regular retro-auricular earphone places a head support of a purposed auricular device on his head the above cited receptacles are arranged in coincidence with patients earflaps, against said earphones. With this receptacles arrangement said inductor coils are arranged nearby said earphone casing.

Variations of signals emitted by transmitter equipment produces an inductor coil magnetic field fluctuation. In that way due to the modulation of the signal emitted by transmitter device, the field generated by inductor coils is changed and then there is a corresponding variation of the induced signal in the telephonic coil which is arranged inside the earphone casing.

As a result, the patient of the present device will receive more pure sounds, without interference, intermodulation or undesirable noises from transmitter device.

### Brief Description of Drawings:

The present invention is illustrated by several drawings in which one preferred embodiment is represented, as illustrative example thereof:
Figure 1 is a perspective view by which general structure of the present device is shown as well as the patient's head arrangement in dashed lines.
Figure 1A is a perspective view showing in detail the retro-auricular earphone arrangement in a patient earflap.

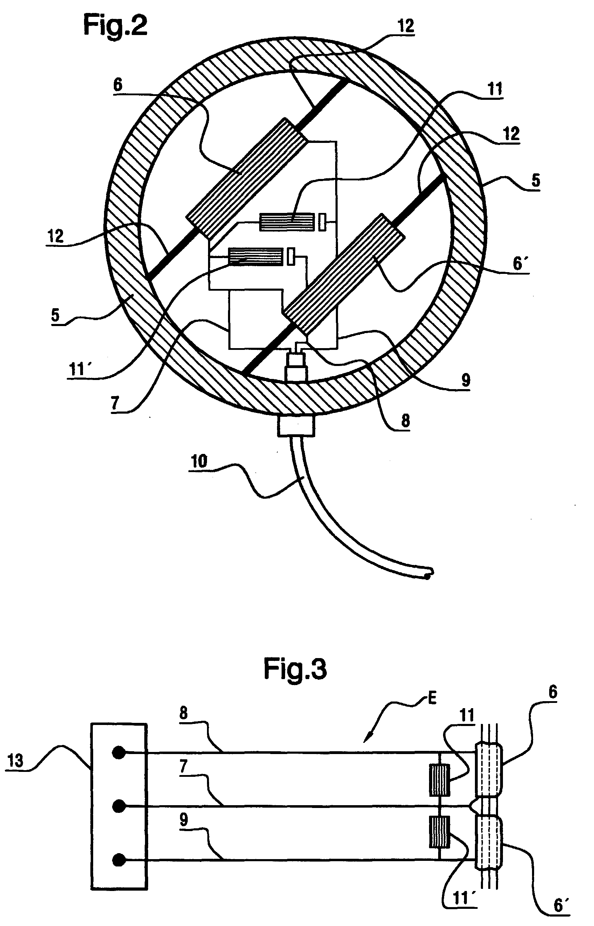

Figure 2 is a schematic illustration of connection circuit of inductor coils arranged inside the above cited receptacles of head support.
Figure 3 is a schematic diagram of connection circuit similar to the circuit of Figure 1 but for a stereophonic reception. Protection resistance is also included.

### Detailed Description of the Invention:

The present invention is an auricular device for hypoacusic patients being connectable to any signal transmitter device (d) of audio frequency (TV set, audio equipment) and useful to be used with retro-auricular earphones (a) that, providing a telephonic coil, are arranged between patient earflap (1) and head (c), comprising:
A head support (b) including a metallic elastic strip (4) normally adjusted to the patient's head (c). This elastic feature of said strip functions like a fastening means of the present device to the patient head. This kind of elastic strips are usually used in the art for headphones. Fixed to the ends (4') of said elastic strip (4) receptacles (5) are capable to be placed against patient earflaps (1). The present auricular device comprises:
   - at least one inductor coil (6) arranged inside one of said receptacles (5), closeness applicable to said retro-auricular earphone (a); and
   - a connection circuit (e) including said inductor coil (6), and including connection means (13) to an audio frequency signals output of said transmitter device (d).

In general terms, the present invention consists of an auricular device for hypoacusics patients that, being applicable to the patient earflap (1) in which is arranged a retro-auricular earphone (a), comprises a head support (b) in whose receptacles (5) inductor coils (6)(6') are arranged. Said inductor coils (6)(6') are closeness applicable to said retro-auricular earphone (a), including said connection circuit (e) to a transmitter device (d) of audio frequency signals.

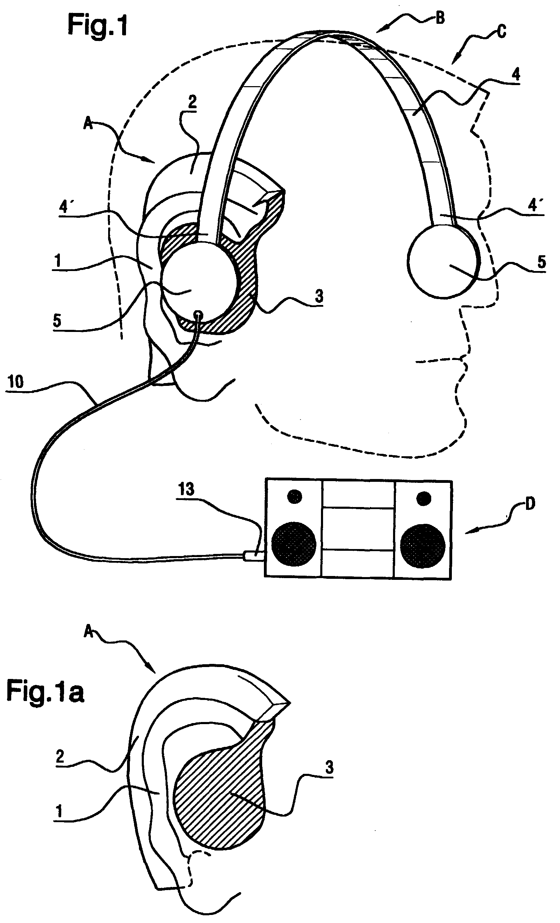

More particularly, the present auricular device comprises a head support (b) adjusted to the patient's head (c). This head support (b) has a normally adjusted elastic strip (4) useful for fastening the purposed device to the patient head (c). Fixed to said ends (4') of said elastic strip (4) respective receptacles (5) are capable to be placed against patient's earflaps (1). Said fixation of said receptacles to said strip ends could be made by any suitable means such as welding, metal clamp, or the like. As is shown in Figure 1, said strip is transversely arranged on the patient head, similar to the strips used in regular headphones.

Retro-auricular earphones (a) are arranged in said patient earflaps (1) whose casing (2) skirts each respective earflap (1) and includes a moldable piece (3) arranged over said earflap (1), at the auditive conduit inlet. This is the reason why receptacles (5) of purposed auricular device are placed against moldable piece (3) of retro-auricular earphone (a).

On the other hand, inside receptacles (5) of head support (b) inductor coils (6)(6') are arranged consisting of coils (6) whose iron core is formed by silicon-iron "I" plates joined by a heat shrinkable tube. Moreover, each inductor coil (6) includes fastening supports (12) to the receptacle (5) walls where is lodged.

Said receptacles may include foam rubber as an acoustic insulator.

In different embodiments the present device can include one or more inductor coils (6), depending on the number of retro-auricular earphones used by the patient. A first (6) and second (6') inductor coils can also be arranged inside the same receptacle (5) if it is connected to a stereophonic transmitter device (d).

With the above cited arrangement, inductor coils (6) are nearness arranged to the casing (2) of earphone (a) inside which the corresponding protection resistance is arranged. In a preferred embodiment, inductor coils (6)(6') are arranged with certain slope corresponding to the telephonic coil location of the retro-auricular earphone (a).

Inductor coils (6)(6') include a connection circuit (e) by which said coils are connected to the transmitter device output of audio frequency signals. In the present embodiment, connection circuit (e) is connected to a stereophonic transmitter device (d) so it comprises a regular wire (7) to both coils (6)(6'), one wire corresponding to left channel (8) and another wire corresponding to right channel (9).

These wires (7)(8)(9) which could be arranged inside a regular wire (10) are fit to a coupler (13) connectable to the transmitter device output (d). Complementary, left channel may include a first protection resistance (11) in parallel to said first inductor coil (6), and a second protection resistance (11') of right channel, in parallel to second inductor coil (6').

Once the present auricular device is arranged on the patient's head (c), the elastic strip (4) of head support (b) allows its adjustment to patient head so that receptacles (5) are placed against earflaps (1). Since in at least one of these earflaps (1) a retro-auricular earphone is arranged, receptacle (5) rests against moldable piece (3) of earphone (a) located in said place.

With this receptacle (5) location, inductor coils (6)(6') lodged therein are nearby arranged to casing (2) of earphone (a) applied to the same earflap (1).

By this way, once a modulation of the signal emitted by transmitter device (d) is produced, the field generated by inductor coils (6)(6') is changed and then there is a variation corresponding to the signal induced in the telephonic coil which is located inside casing (2) of earphone (a).

It will be obvious for any person skilled in the art that several changes could be made to the purposed auricular device regarding certain construction details and forms, without separating from main principles which are clearly stated in the following set of claims.

## Claims

1. Auricular device for hypoacusic patients, being connectable to any audio frequency signal transmitter device, and being applicable to retro-auricular earphones of hypoacusic patients, including said earphones a telephonic coil, is characterized by:
a head support defined by an elastic strip for adjusting said support to the patient head, fixed to the ends of said head support there is a receptacle; at least one inductor coil is arranged inside at least one of said receptacles, and a connection circuit including said inductor coil and connection means for connecting said auricular device to an audio frequency signals output of said audio frequency signal transmitter.

2. Auricular device for hypoacusics, in accordance with claim 1; characterized by inside one of said receptacles two inductor coils are arranged, each inductor coil is connected to each channel of a stereophonic transmitter device.

3. Auricular device for hypoacusic patients, in accordance with claims 1 and 2; characterized by said connection circuit comprises a protection resistance connected in parallel to said inductor coils.

4. Auricular device for hypoacusic patients, in accordance with claim 1; characterized by said inductor coils have iron made cores.

5. Auricular device for hypoacusic patients, in accordance with claim 1 and 4; characterized by said inductor coil has an iron made core constituted by "I" silicon-iron plates.

6. Auricular device for hypoacusic patients, in accordance with claim 1; characterized by location of said inductor coil inside said receptacle corresponds to the location of said telephonic coil inside said retro-auricular earphone.

7. Auricular device for hypoacusic patients, in accordance with claim 1; characterized by said receptacles include foam rubber as acoustic insulator.

8. Auricular device for hypoacusic patients, in accordance with claim 1; characterized because said audio frequency signal transmitter device is a TV set, an audio equipment, a computer, a portable recorder or the like.
